# EUROPEAN PATENT APPLICATION

(11) **EP 4 597 377 A1**
(43) Date of publication of application: **06.08.2025**
(21) Application number: 23871353.1
(22) Date of filing: 03.07.2023
(51) Int. Cl.: G06Q 10/02, G06Q 30/0645, G06Q 50/06

(54) **SYSTEM, METHOD, AND PROGRAM**

(30) Priority: 28.09.2022 JP 2022155613
(71) Applicant: HONDA MOTOR CO., LTD., Tokyo 105-8404 (JP)
(72) Inventor: IDE Tatsuya, Wako-shi, Saitama 351-0193 (JP); KOIDE Fumitaka, Wako-shi, Saitama 351-0193 (JP)
(74) Representative: Weickmann & Weickmann PartmbB
(86) International application number: PCT/JP2023/024637
(87) International publication number: WO 2024/070109

(57) **Abstract**

A system that accepts and manages reservation information of a reservation target, including: a accepting unit that accepts the reservation information, wherein the reservation information includes a selection condition for selecting a reservation target to be used by a user from reservation target candidates, and importance information that designates importance of the selection condition; and a storage unit that stores the selection condition and the importance information in correspondence with the selection condition. A method for accepting and managing reservation information of a reservation target, including: accepting the reservation information, wherein the reservation information includes a selection condition for selecting a reservation target to be used by a user from reservation target candidates, and importance information that designates importance of the selection condition; and storing the selection condition and the importance information in association with each other.

## Description

### BACKGROUND

### 1. TECHNICAL FIELD

The present invention relates to a system, a method, and a program.

### 2. RELATED ART

Patent document 1 describes a technology for utilizing a storage cell of an electric vehicle as a distributed energy resource according to an operational situation of the electric vehicle. Patent document 2 describes an adjustment system which manages a loan of an object or a space between users.

### Prior Art Documents

### Patent Documents

Patent Document 1: Japanese Patent Application Publication No. 2022-050126
Patent document 2: PCT International Publication No. WO2018/167943

### Technical Problems

It is desirable to be capable of appropriately selecting a reservation target to be used by a user from reservation target candidates.

### GENERAL DISCLOSURE

A first aspect of the present invention provides a system. The system accepts and manages reservation information of a reservation target. The system includes an accepting unit that accepts the reservation information, wherein the reservation information includes a selection condition for selecting a reservation target to be used by a user from reservation target candidates, and importance information that designates importance of the selection condition. The system includes a storage unit that stores the selection condition and the importance information in association with each other.

The above-described system may include a reservation arbitration unit that arbitrates conflicting reservations by excluding a selection condition for which the importance is lower in a case of conflicting reservations for a first reservation target.

In any above-described system, the reservation arbitration unit may arbitrate, in a case of conflicting reservations for the first reservation target, conflicting reservations by selecting a second reservation target that meets the selection condition that has been excluded from reservation target candidates.

In any above-described system, the reservation target may be a vehicle.

In any above-described system, the selection condition may include at least one of a condition for selecting a usage period of the vehicle, a condition for selecting a vehicle type, or a condition for selecting a particular vehicle.

In any above-described system, the vehicle may be an electrically powered vehicle with a battery. The selection condition may include a condition for selecting a usage period of the vehicle. The usage period may be one of a first period of using the battery for exchanging electrical power with a power grid or a second period during which the vehicle is in operation. The reservation arbitration unit may determine, in a case where the first period and the second period conflict for a first vehicle, the first vehicle as a vehicle for exchanging electrical power with the power grid, together with a second vehicle as the vehicle in operation.

In any above-described system, the reservation information further may include priority information indicating priority of each of a plurality of selection conditions.

In any above-described system, the reservation information may further include mandatory information indicating whether a reservation is mandatory. When the reservation information includes the mandatory information indicating a fact that a reservation is not mandatory, the reservation arbitration unit may not assign a reservation target to a user if a reservation target that satisfies the selection condition is not among reservation target candidates.

Any above-described system may further include a transmitting unit that transmits a notification indicating that a reservation target is changed to a user for whom the reservation target has been changed, when the reservation target is changed due to arbitration of conflicting reservations by the reservation arbitration unit.

In a second aspect of the invention, a method is provided. The method is for accepting and managing reservation information of a reservation target. The method includes accepting the reservation information, wherein the reservation information includes a selection condition for selecting a reservation target to be used by a user from reservation target candidates, and importance information that designates importance of the selection condition. The method includes storing the selection condition and the importance information in association with each other.

In the third aspect of the present invention, a program is provided. The program causes a computer to function as the above system.

The summary clause does not describe all necessary features of the present invention. The present invention may also be a sub-combination of the features described above.

### BRIEF DESCRIPTION OF THE DRAWINGS

Fig. 1 conceptually illustrates a utilization form of a system 5 in an embodiment.
Fig. 2 illustrates an example of a system configuration of a vehicle management apparatus 60.
Fig. 3 illustrates an example of a system configuration of a power control apparatus 40.
Fig. 4 illustrates an execution sequence of the power control apparatus 40, an integrated management apparatus 50, and the vehicle management apparatus 60.
Fig. 5 illustrates a list of a plurality of pieces of reservation information stored in the integrated management apparatus 50 and the vehicle management apparatus 60 in a table format.
Fig. 6 illustrates a dispatch plan and a power plan before performing arbitration, and a dispatch plan and a power plan after performing the arbitration of the dispatch plan and the power plan.
Fig. 7 illustrates an example of a computer 2000.

### DESCRIPTION OF EXEMPLARY EMBODIMENTS

Hereinafter, the present invention will be described through embodiments of the present invention, but the following embodiments do not limit the present invention according to claims. In addition, not all of the combinations of features described in the embodiments are essential to the solution of the invention.

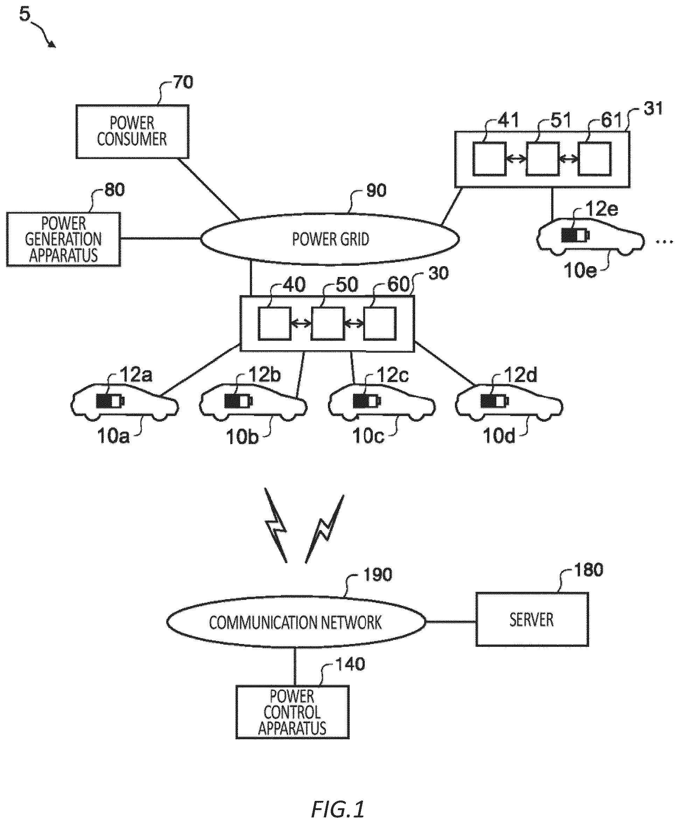

Fig. 1 conceptually illustrates a utilization form of a system 5 in an embodiment. The system 5 includes a power generation apparatus 80, a plurality of vehicles including a vehicle 10a, a vehicle 10b, a vehicle 10c, a vehicle 10d, and a vehicle 10e, a power control apparatus 40 and a power control apparatus 41, an integrated management apparatus 50 and an integrated management apparatus 51, a vehicle management apparatus 60 and a vehicle management apparatus 61, a power control apparatus 140, and a server 180.

A power consumer 70 and the power generation apparatus 80 are connected to a power grid 90. The electrical power generated by the power generation apparatus 80 can be supplied to the power consumer 70 through the power grid 90. The electric power grid 90 is an electrical power system, for example.

The vehicle 10a, the vehicle 10b, the vehicle 10c, the vehicle 10d, and the vehicle 10e are electric vehicles including a battery 12a, a battery 12b, a battery 12c, a battery 12d, and a battery 12e which accumulate driving power for vehicle traveling, respectively. In the present embodiment, in particular, the vehicle 10a, the vehicle 10b, the vehicle 10c, and the vehicle 10d may be collectively referred to as a "vehicle(s) 10", and the battery 12a, the battery 12b, the battery 12c, and the battery 12d may be collectively referred to as a "battery 12".

The vehicle 10 is disposed in a business office 30. The business office 30 functions as a base for parking the vehicle 10. The vehicle 10 may be, for example, a vehicle for business use or a vehicle for carrying cargos such as products handled by the business office 30. Electrical power is supplied to the business office 30 through the power grid 90.

The power control apparatus 40, the integrated management apparatus 50, and the vehicle management apparatus 60 are provided in the business office 30. The vehicle 10 is provided to be able to communicate with the vehicle management apparatus 60 through a mobile communication network or the like. The business office 30 has a local power grid in the business office, and can perform power transfer from/to the battery 12 included in the vehicle 10 through a charge/discharge apparatus provided in the business office 30. That is, the vehicle 10 can be used for energy management in the business office 30. The battery 12 included in the vehicle 10 can perform power transfer from/to the power grid 90 through the power grid in the business office 30. The power control apparatus 40 controls charging and discharging of the vehicle 10 disposed in the business office 30 so as to at least satisfy a power demand in the business office 30.

The power control apparatus 40, the integrated management apparatus 50, and the vehicle management apparatus 60 are managed, for example, in the business office 30. The power control apparatus 40 and the integrated management apparatus 50 are provided to be able to communicate with each other through a communication line. The integrated management apparatus 50 and the vehicle management apparatus 60 are provided to be able to communicate with each other through a communication line. The integrated management apparatus 50 and the vehicle management apparatus 60 may be provided outside the business office 30. The integrated management apparatus 50 and the vehicle management apparatus 60 may be provided to be able to communicate with each other through a communication line such as the Internet. One or both of the integrated management apparatus 50 and the vehicle management apparatus 60 may be embodied as a server such as a cloud server.

The vehicle management apparatus 60 determines a moment at which the vehicle 10 departs from the business office 30 and a moment at which the vehicle returns to the business office. The integrated management apparatus 50 adjusts the moment at which the vehicle 10 departs from the business office 30 and the moment at which the vehicle returns to the business office, so as to satisfy the power demand in the business office 30. For example, the integrated management apparatus 50 adjusts the moment at which the vehicle 10 departs from the business office 30 and the moment at which the vehicle returns to the business office, so that the peak cut of the power demand in the business office 30 can be performed. The vehicle management apparatus 60 manages the vehicle 10 based on the schedule of the vehicle 10 adjusted by the integrated management apparatus 50. The power control apparatus 40 controls charging and discharging of the battery 12 included in the vehicle 10 based on the schedule of the vehicle 10 adjusted by the integrated management apparatus 50.

The vehicle 10e is disposed in a business office 31. The business office 31 functions as a base for parking the vehicle 10e. Similarly to the vehicle 10, the vehicle 10e may be a vehicle for business use or a vehicle for carrying cargos such as products handled by the business office 30. Electrical power is supplied to the business office 31 through the power grid 90. The power control apparatus 41, the integrated management apparatus 51, and the vehicle management apparatus 61 are provided in the business office 31.

In the business office 31, the power control apparatus 41, the integrated management apparatus 51, and the vehicle management apparatus 61 correspond to the power control apparatus 40, the integrated management apparatus 50, and the vehicle management apparatus 60. The power control apparatus 41, the integrated management apparatus 51, and the vehicle management apparatus 61 perform control similar to that of the power control apparatus 40, the integrated management apparatus 50, and the vehicle management apparatus 60 except that a control target and/or a management target are the business office 31 and/or the vehicle 10e. For this reason, description of the control regarding the power control apparatus 41, the integrated management apparatus 51, the vehicle management apparatus 61, and the vehicle 10 is omitted.

The power control apparatus 140 communicates with the power control apparatus 40 and the power control apparatus 41 through a communication network 190, and supervises overall power control in the business office 30 and the business office 31. For example, the power control apparatus 140 collects information regarding power supply and demand from the power control apparatus 40 and the power control apparatus 41, and adjusts overall power supply and demand including electrical power trading with the power grid 90, so that the power control apparatus 40 and the power control apparatus 41 are caused to perform control so as to minimize the total power cost of the business office 30 and the business office 31.

The power control apparatus 140 is connected to the server 180 through the communication network 190. The server 180 is, for example, a server used by a power aggregator. The server 180 conducts electrical power trading in an electricity market. The electric power control apparatus 140 can provide the server 180 with electric power resources which are held by aggregating the vehicles deployed in the business office 30 and the business office 30. The electric power control apparatuses 40 and 41 control charge and discharge of the battery of each of the vehicles deployed in the business office 30 and the business office 31, and the electric power control apparatus 140 provides electric power agreed by the server 180. For example, according to the demand from the server 180, the power control apparatus 140 controls the power control apparatus 40 and charging and discharging of the battery 12 controlled by the power control apparatus 40, and provides electrical power corresponding to the demand.

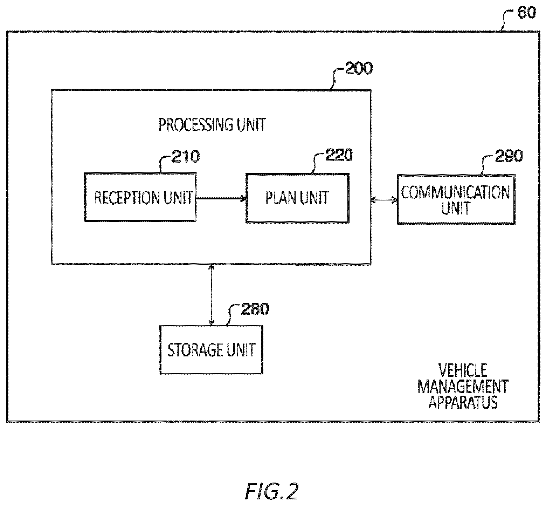

The control mainly related to the business office 30 will be described with reference to Figs. 2 to 6 or the like. Specifically, control related to the electric power control apparatus 40, the integrated management apparatus 50, the vehicle management apparatus 60, and the vehicle 10 is described. However, the control related to the business office 30 can be applied to the control related to the business office 31.

Fig. 2 illustrates an example of a system configuration of the vehicle management apparatus 60. The vehicle management apparatus 60 includes a processing unit 200, a storage unit 280, and a communication unit 290.

The processing unit 200 controls the communication unit 290. The communication unit 290 is responsible for communication between the vehicle 10 and the integrated management apparatus 50. The processing unit 200 is embodied as an arithmetic processing apparatus including a processor. Each storage unit 280 is embodied including a non-volatile storage medium. The processing unit 200 performs processing by using information stored in the storage unit 280. The processing unit 200 may be embodied as a microcomputer including a CPU, ROM, RAM, I/O, bus, and the like. The vehicle management apparatus 60 may be embodied as a computer.

In the present embodiment, the vehicle management apparatus 60 shall be embodied as a single computer. However, in another embodiment, the vehicle management apparatus 60 may be embodied as a plurality of computers. At least a part of the functions of the vehicle management apparatus 60 may be embodied as one or more servers such as a cloud server.

The processing unit 200 includes an accepting unit 210 and a plan unit 220. The accepting unit 210 accepts reservation information of a reservation target. The reservation information includes a selection condition for selecting a vehicle 10 to be used by a user from vehicles 10 and importance information that designates importance of the selection condition. For example, the selection condition includes at least one of a condition for selecting a usage period of the vehicle 10, a condition for selecting a vehicle type, or a condition for selecting the particular vehicle 10. The selection condition is a condition designated when the user selects a reservation target vehicle from vehicles 10 that are reservation target candidates. The importance information is information designated when the user selects a reservation target vehicle from vehicles 10 that are reservation target candidates. The storage unit 280 stores the selection condition and the importance information in association with each other. **In** the present embodiment, the vehicle 10 is an example of the reservation target candidate and the reservation target.

The plan unit 220 prepares a use plan of the vehicle 10 based on the information stored in the storage unit 280. For example, based on the selection condition stored in the storage unit 280, the plan unit 220 prepares a dispatch plan indicating which user is allowed to use the vehicle 10.

The communication unit 290 transmits the dispatch plan to the integrated management apparatus 50. The communication unit 290 may further transmit at least a part of the reservation information to the integrated management apparatus 50. As described below, when the vehicle 10 to be used by the user is changed due to arbitration of a conflicting reservation, the communication unit 290 may transmit, to the user that has reserved the changed vehicle 10, a notification indicating that the vehicle 10 is changed.

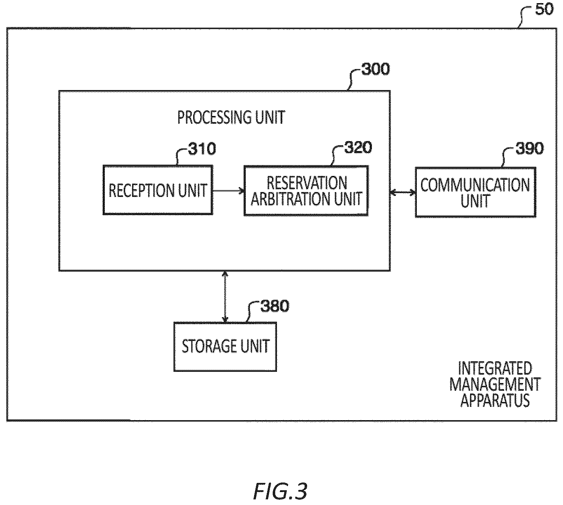

Fig. 3 illustrates an example of a system configuration of the integrated management apparatus 50. The integrated management apparatus 50 includes a processing unit 300, a storage unit 380, and a communication unit 390.

The processing unit 300 controls the communication unit 390. The communication unit 390 is responsible for communication between the power control apparatus 140 and the integrated management apparatus 50. The processing unit 300 is embodied as an arithmetic processing apparatus including a processor. Each storage unit 380 is embodied including a non-volatile storage medium. The processing unit 300 performs processing by using information stored in the storage unit 380. The processing unit 300 may be embodied as a microcomputer including a CPU, a ROM, a RAM, an I/O, a bus, and the like. The integrated management apparatus 50 may be embodied as a computer.

In the present embodiment, the integrated management apparatus 50 shall be embodied including a single computer. However, in another embodiment, the integrated management apparatus 50 may be embodied as a plurality of computers. At least a part of the functions of the integrated management apparatus 50 may be embodied including one or more servers such as a cloud server.

The processing unit 300 includes an accepting unit 310 and a reservation arbitration unit 320.

The accepting unit 310 accepts reservation information of a reservation target. The reservation information includes a selection condition for selecting a vehicle 10 to be used by a user from vehicles 10 and importance information that designates importance of the selection condition. For example, the selection condition may include at least one of a condition for selecting a usage period of the vehicle 10, a condition for selecting a vehicle type, or a condition for selecting the particular vehicle 10. The accepting unit 310 may acquire the reservation information input to the vehicle management apparatus 60 through the vehicle management apparatus 60 and the communication unit 390. The storage unit 380 stores the selection condition and the importance information in association with each other.

This makes it easier to arbitrate a conflict based on the importance of the selection condition when there occurs a conflict between reservations of the vehicle 10 selected due to the selection condition. This allows reducing conflicts between reservations, improving convenience for users and maintaining utilization rate for services that use the vehicle 10.

The reservation arbitration unit 320 arbitrates conflicting reservations by excluding a selection condition for which the importance is lower in a case of conflicting reservations for a first vehicle. The reservation arbitration unit 320 may arbitrate conflicting reservations by excluding a predetermined selection condition for which the importance is lower in a case of conflicting reservations for the first vehicle. The reservation arbitration unit 320 may arbitrate conflicting reservations by excluding a selection condition for which the importance is lower with a higher priority in a case of conflicting reservations for the first vehicle. This allows finding another vehicle 10 by excluding a selection condition for which the importance is low.

The reservation arbitration unit 320 arbitrates conflicting reservations by selecting a second vehicle, from the vehicles 10, which meets the excluded selection conditions in a case of conflicting reservations for the first vehicle. This allows assigning an alternative vehicle to a user with a selection condition for which the importance is low, thereby it is possible to maintain high utilization rate for the services that use the vehicles 10 while minimizing disadvantages to users.

The selection condition may include a condition for selecting a usage period of the vehicle. The usage period may be one of a first period during which the battery 12 is used for exchanging electrical power with a power grid or a second period during which the vehicle is in operation. The power grid is, for example, a power grid in the business office 30 and/or a power grid 90. The reservation arbitration unit 320 determines, in a case where the first period and the second period conflict for a first vehicle, the first vehicle as a vehicle for exchanging electrical power with the power grid, together with a second vehicle as the vehicle in operation. This allows the battery 12 to be actively assigned for peak cut and other energy management purposes at the business office 30.

The reservation information may further include priority information indicating priority of each of a plurality of selection conditions. The reservation arbitration unit 320 may select an excluded selection condition when selecting a vehicle 10 based on the priority information.

The reservation information may further include mandatory information indicating whether the reservation is mandatory. When the reservation information includes the mandatory information indicating a fact that a reservation is not mandatory, the reservation arbitration unit 320 may not assign a vehicle 10 to a user if a vehicle 10 that satisfies the selection condition is not among vehicles 10.

When the vehicle 10 is changed due to arbitration of a conflicting reservation by the reservation arbitration unit 320, the communication unit 390 may transmit, to the user that has reserved the changed vehicle 10, a notification indicating that the vehicle 10 is changed. The communication unit 390 may transmit a notification indicating that the vehicle 10 is changed through the vehicle management apparatus 60.

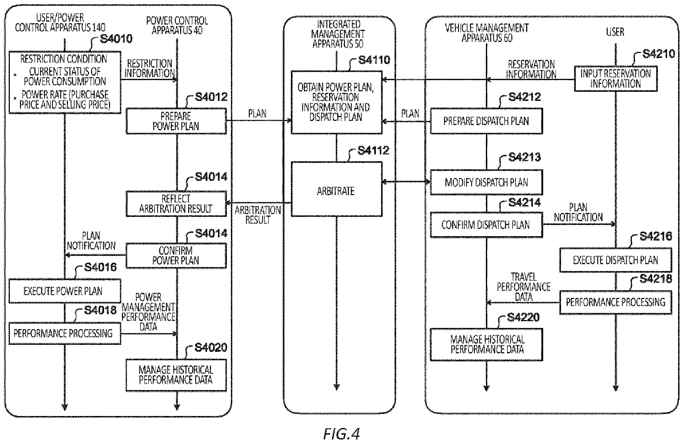

Fig. 4 illustrates an execution sequence of the power control apparatus 40, the integrated management apparatus 50, and the vehicle management apparatus 60. The processing of Fig. 4 shows processing while a power plan and a dispatch plan for the next day are prepared on the previous day and various kinds of control are executed according to the prepared plan.

As the control regarding the power control apparatus 40, in S4010, at least one of the user of the power control apparatus 40 or the power control apparatus 140 sets a restriction condition regarding the power plan in the business office 30 and notifies the power control apparatus 40 of the restriction condition. The power control apparatus 140 may set the restriction condition in the business office 30 so as to minimize the overall power cost in the business office 31 and the business office 30. Note that the user is a person or a system that inputs, to the power control apparatus 40, information regarding power management in the business office 30. The restriction condition is a condition which becomes a restriction for the preparation of the power plan. The restriction condition may include a restriction which is required to meet the power demand. The restriction condition includes, for example, information in relation to a current status of the amount of power generation, a current status of an amount of power consumption, and a power rate. The power generation amount is, for example, a power generation amount in the power generation apparatus 80. The power consumption amount is a power consumption amount in the business office 30. The power rate includes a power purchase price and a power selling price. The power purchase price is, for example, a condition regarding an amount of money imposed as a consideration for power reception by the business office 30 from the power grid 90. The power selling price is, for example, a condition regarding an amount of money obtained as a compensation for power supply by the business office 30 to the power grid 90.

In S4012, the power control apparatus 40 prepares a power plan in the business office 30 for the next day. The power plan includes a power consumption amount for each time zone in one day. The power plan determines how much electrical power is consumed for each time zone in the business office 30. The power consumption amount for each time zone on the next day may be predicted from environmental information such as weather information on the next day and past performance data. The power plan may include peak shaving information to perform the peak shaving. The peak shaving information may include information indicating how much amount of power consumption is to be suppressed in the business office 30 in which time zone. The peak shaving information may include information indicating how much amount of electrical power is to be received in the business office 30 from the outside in which time zone.

The power control apparatus 40 may prepare an optimal power plan in the business office 30. For example, the power control apparatus 40 may prepare a power plan so as to minimize the amount of electrical power received from the power grid 90 in the business office 30. The power control apparatus 40 may prepare a power plan so as to minimize the amount of money imposed as a consideration for power reception in the business office 30 from the power grid 90. The power control apparatus 40 may prepare a power plan so as to maximize the amount of money obtained as a compensation for power supply in the business office 30 to the power grid 90. In this manner, the power control apparatus 40 prepares an optimal power plan as the power plan in the business office 30 for the next day on the basis of the restriction condition. By this power plan, the amount of power which is required to be received from the outside for each time window for the next day, is determined. The amount of electrical power which needs to be received from the outside may be supplied from the battery 12 included in the vehicle 10 parking in the business office 30. The power control apparatus 40 transmits the prepared power plan to the integrated management apparatus 50.

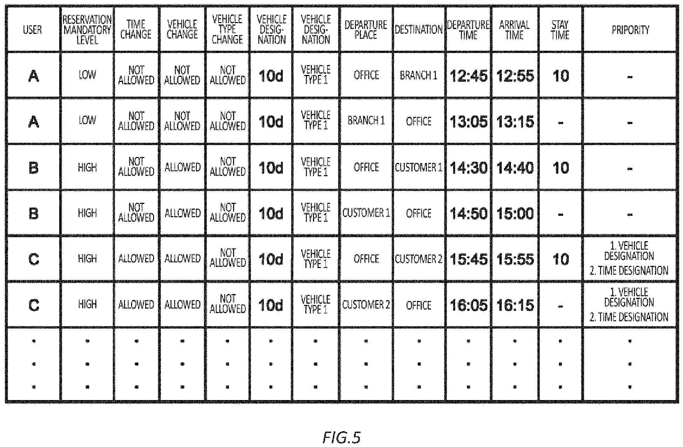

As the control regarding the vehicle management apparatus 60, in S4210, the user inputs reservation information regarding the dispatch of the vehicle 10. The contents of the reservation information will be specifically described with reference to Fig. 5. The user of the vehicle management apparatus 60 is a person, a system, or the like that uses the vehicle 10. The reservation information includes a condition that can be a constraint on preparing the dispatch plan. The reservation information includes, for example, a departure place and a destination, a departure time and an arrival time to the destination, and a type, a capacity, a weight, and the like of a load on the vehicle 10. Depending on the departure place and the destination, it is determined from which place to which place the vehicle 10 needs to travel. The departure time may be, for example, the moment at which the vehicle 10 departs from the business office 30, and the arrival time may be, for example, the moment at which the vehicle 10 returns to the business office 30. For the departure time and the arrival time, a time adjustment allowance indicating allowable time for changes in the departure time and the arrival time of the vehicle 10 may be set. The reservation information input in S4210 is transmitted to the vehicle management apparatus 60 and transmitted to the integrated management apparatus 50 through the vehicle management apparatus 60.

In S4212, the plan unit 220 of the vehicle management apparatus 60 prepares a dispatch plan in the business office 30 for the next day on the basis of the restriction condition notified from the user. For example, the plan unit 220 determines the vehicle 10 to be used for transportation of persons or loads, the travel route of the vehicle 10, and the travel speed of the vehicle 10, so as to satisfy the transportation demand determined by the reservation information. The vehicle management apparatus 60 transmits the prepared dispatch plan to the integrated management apparatus 50.

In S4110, the accepting unit 310 of the integrated management apparatus 50 accepts the power plan transmitted from the power control apparatus 40, and the reservation information as well as the dispatch plan transmitted from the vehicle management apparatus 60.

In S4112, the reservation arbitration unit 320 of the integrated management apparatus 50 determines whether the power plan in the business office 30 is satisfied when the vehicle 10 is operated according to the dispatch plan. For example, a period during which the vehicle 10 is predicted to be present at the business office 30 is determined from the dispatch plan. During a certain period when the business office 30 requires power supply from the outside, the reservation arbitration unit 320 determines that the power plan is satisfied when it is predicted that electrical power can be accepted from the battery 12 included in the vehicle 10 existing in the business office 30 during the period.

When the reservation arbitration unit 320 has determined that the power plan cannot be satisfied when dispatching according to the dispatch plan, the reservation arbitration unit 320 determines how to correct the dispatch plan to be capable of satisfying the power plan. For example, the reservation arbitration unit 320 determines adjustment amounts of departure time and arrival time of the vehicle 10 in the dispatch plan.

The integrated management apparatus 50 transmits, to the vehicle management apparatus 60, modification information including the determined adjustment amounts of the departure time and the return time. When receiving the modification information from the integrated management apparatus 50, the plan unit 220 of the vehicle management apparatus 60 modifies the dispatch plan prepared in S4212 on the basis of the modification information (S4213). For example, the plan unit 220 modifies the dispatch plan so as to satisfy the reservation information on the basis of the adjustment amounts of the departure time and the return time received from the integrated management apparatus 50. The vehicle management apparatus 60 transmits the modification result of the dispatch plan to the integrated management apparatus 50. The integrated management apparatus 50 and the vehicle management apparatus 60 repeat the processing of S4112 and S4213 to determine an executable dispatch plan. In S4213, the plan unit 220 determines an operation route of the vehicle 10, and determines the feasible vehicle dispatch plan by determining whether the departure time and the arrival time which are designated by the reservation information can be kept, and also the vehicle 10 can arrive back to the business office 30 without running out of electric power based on the SOC and a power consumption rate of the vehicle 10. In S4112, the reservation arbitration unit 320 may determine the dispatch plan to be performable with a condition that the dispatch plan is determined to be profitable comprehensively, considering a reduction amount in power cost for the business office 30 obtained when electric power transfer is performed between the battery 12 and the business office 30 according to the determined power plan, and operation cost of the vehicle 10 and utilization rate of the vehicle 10 required when the operation of the vehicle 10 is performed according to the dispatch plan.

When the dispatch plan is determined, an arbitration result including the dispatch plan is transmitted to the power control apparatus 40. When receiving the arbitration result from the integrated management apparatus 50, the power control apparatus 40 reflects the arbitration result in the power plan on the basis of the arbitration result (S4014), and notifies the user of the power plan confirmed by reflecting the arbitration result (S4015). In S4016, the user and the power control apparatus 140 execute the control according to the notified power plan. In S4018, the user and the power control apparatus 140 perform performance processing in relation to the execution of the power plan. For example, the user performs processing of collecting and inputting the performance data of power management including the performance data of the power consumption amount in each time zone. In S4020, the power control apparatus 40 manages, as historical information, the performance data input from each of the user and the power control apparatus 140. It should be noted that the power control apparatus 40 may use the historical information managed by the power control apparatus 40 in the case of preparing the power plan later.

The vehicle management apparatus 60 confirms the dispatch plan finally determined in S4213 (S4214), and notifies the user of the confirmed dispatch plan through the communication unit 290. In S4216, the user executes operation control of the vehicle 10 according to the notified dispatch plan. In S4218, the user performs the performance processing in relation to the execution of the vehicle dispatch plan. For example, the user includes processing of collecting and inputting travel performance data including travel data of each vehicle 10, the remaining capacity of the battery 12, and the like. In S4220, the vehicle management apparatus 60 manages, as historical information, the travel performance data input from the user. Note that the vehicle management apparatus 60 may use the historical information managed by the vehicle management apparatus 60 when preparing the dispatch plan later.

Fig. 5 illustrates a list of a plurality of pieces of reservation information stored in the integrated management apparatus 50 and the vehicle management apparatus 60 in a table form. Each piece of the reservation information includes information indicating "user", "reservation mandatory level", "time change", "vehicle change", "vehicle type change", "vehicle designation", "vehicle type designation", "departure place", "destination", "departure time", "arrival time", "stay time", and "priority". Among the information included in the reservation information, the "vehicle designation", "vehicle type designation", "departure place", "destination", "departure time", "arrival time", and "stay time" are examples of the selection conditions of the vehicle 10 to be used by a user. The "time change", "vehicle change", and "vehicle type change" are examples of the importance information for designating the importance of the selection conditions.

The "user" is identification information of a person that uses the vehicle 10. The "reservation mandatory level" is information indicating whether the assignment of the vehicle 10 to the user is mandatory. The "mandatory level" being "high" indicates a fact that the assignment of the vehicle 10 to the user is required. The "mandatory level" being "low" indicates a fact that the vehicle 10 may not be assigned when there is no vehicle 10 that satisfies the designated selection condition. That is, the "mandatory level" is information indicating whether the vehicle 10 may not be assigned when there is no vehicle 10 that satisfies the selection conditions. The "mandatory level" is an example of mandatory information indicating whether the reservation is mandatory.

The "time change" is information indicating whether the selection condition regarding the usage period is allowed to be changed. The selection condition regarding the usage period is the "departure time", the "arrival time", and the "stay time" to be described later. "Not allowed" of the "time change" indicates that the selection condition regarding the usage period is not allowed to be changed. "Allowed" of the "time change" indicates that the selection condition regarding the usage period is allowed to be changed. The "time change" is an example of importance information for designating an importance of the selection conditions related to the usage period.

The "vehicle change" is information indicating whether the selection condition related to the vehicle to be used is allowed to be changed. The selection condition related to the vehicle to be used is the "vehicle designation" described below. The "vehicle change" being "not allowed" indicates that the selection condition related to the vehicle is not allowed to be changed. The "vehicle change" being "allowed" indicates that the selection condition related to the vehicle to be used is allowed to be changed. The "vehicle change" is an example of the importance information for designating the importance of the selection condition related to the vehicle to be used.

The "vehicle type change" is information indicating whether the selection condition regarding the type (vehicle type) of the vehicle to be used is allowed to be changed. The selection condition regarding the vehicle type is the "vehicle type designation" to be described later. "Not allowed" of "vehicle type change" indicates that the selection condition regarding the vehicle type is not allowed to be changed. "Allowed" of the "vehicle type change" indicates that the selection condition regarding the vehicle type is allowed to be changed. The "vehicle type change" is an example of importance information for designating the importance of the selection condition related to the vehicle type.

The "vehicle designation" is designated when a particular vehicle 10 is desired to be used. The "vehicle designation" is identification information of the vehicle 10 that is desired to be used.

The "vehicle type designation" is designated when it is desired to use a vehicle of a particular vehicle type. The "vehicle type designation" is identification information of the vehicle type.

The "departure place" indicates the departure place of the vehicle 10, and the "destination" indicates the destination where the vehicle 10 travels.

The "departure time" is a moment at which the vehicle 10 is scheduled to depart from the departure place. The "arrival time" is a moment at which the vehicle 10 is scheduled to arrive at the destination. The "stay time" indicates a length of time in which the vehicle 10 stays at the destination. As an example, in the "stay time" in Fig. 5, the length of time for staying at the destination is indicated in minutes. The reservation information when the destination is the business office 30 does not include the "stay time".

The "priority" is an example of the priority information indicating the priority of each of the plurality of selection conditions. Specifically, the "priority" is information indicating order of priority of the selection conditions allowed to be changed. More specifically, the "priority" is information indicating the priority of the selection conditions that are designated to be "allowed" according to the "time change", "vehicle change", or "vehicle type change" among the selection conditions related to the departure time, arrival time, and stay time (time designation), selection conditions of the "vehicle designation", and selection conditions of the "vehicle type designation".

In the example in Fig. 5, according to the reservation information of a user A, the reservation is for using the vehicle 10d to depart from the business office at 12:45, arrive at the branch 1 location at 12:55, then stay at the branch 1 location for 10 minutes, depart from the branch 1 location at 13:05, and arrive at the business office 30 at 13:15. This reservation designates that time change is not allowed, and that vehicle change and vehicle type change are not allowed. In this reservation, because the mandatory level "low" is designated, when the selection conditions for time designation or the selection conditions of the vehicle type designation are not satisfied, a fact that the user A may not be assigned the vehicle 10, that is, a fact is that the reservation may be canceled is designated.

In the example in Fig. 5, according to the reservation information of a user B, the reservation is for using the vehicle 10d to depart from the business office at 14:30, arrive at the customer 1 location at 14:40, then stay at the customer 1 location for 10 minutes, depart from the customer 1 location at 14:50, and arrive at the business office 30 at 15:00. This reservation designates that time change is not allowed, that vehicle change is allowed, and that vehicle type change is not allowed. In this reservation, because the mandatory level "high" is designated, a fact is that the assignment of the vehicle 10 to the user B is mandatory is designated.

In the example of Fig. 5, according to the reservation information of the user C, it is reserved to use the vehicle 10d to depart from the business office at 15:45, arrive at the place of a customer 2 location at 15:55, then stay at the place of the customer 2 location for 10 minutes, depart from the place of the customer 2 location at 16:05, and arrive at the business office 30 at 16:15. This reservation designates that time change is allowed, that vehicle change is allowed, and that vehicle type change is not allowed. In addition, in this reservation, it is designated that the priority of the selection conditions related to vehicle designation is higher than the priority of the selection conditions related to time designation. In this reservation, because the mandatory level "high" is designated for the user C, a fact is that the assignment of the vehicle 10 to the user C is mandatory is designated.

The reservation arbitration unit 320 arbitrates the conflicting reservations based on the reservation information when a conflict in reservations occurs. For example, the reservation arbitration unit 320 adjusts the conflicting reservations by adjusting the departure time and the arrival time. The reservation information may further include, as the selection condition, information indicating a time adjustment allowance indicating allowable time for changes in the departure time and/or the arrival time. The reservation arbitration unit 320 may adjust the conflicting reservations by adjusting the departure time and/or the arrival time in a range of time adjustment allowance.

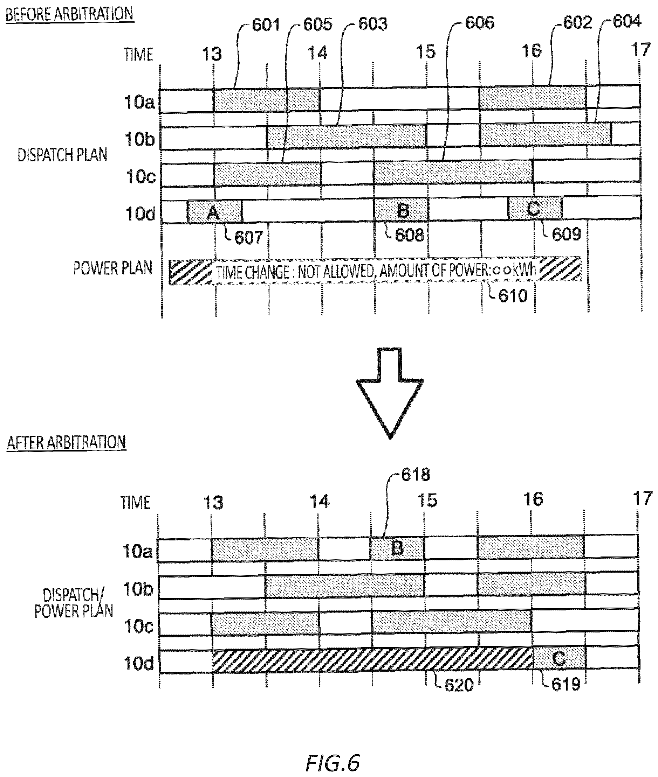

Fig. 6 illustrates a dispatch plan and a power plan before the performance of the arbitration, and a dispatch plan and a power plan after the performance of the arbitration of the dispatch plan and the power plan.

As shown in Fig. 6, in the dispatch plan before the arbitration devised by the vehicle management apparatus 60, as shown by the sign 601 and the sign 602, the vehicle 10a is planned to be used during a period from 13:00 to 14:00 and a period from 15:30 to 16:30. Furthermore, as shown by the sign 603 and the sign 604, the vehicle 10b is planned to be used during a period from 13:30 to 15:00 and a period from 15:30 to 16:45. Furthermore, as shown by the sign 605 and the sign 606, the vehicle 10c is planned to be used during a period from 13:00 to 14:00 and a period from 14:30 to 16:00. Furthermore, as shown by the sign 607, the sign 608, and the sign 609, the vehicle 10d is planned to be used during a period from 12:45 to 13:15, a period from 14:30 to 15:00, and a period from 15:45 to 16:15.

In addition, as shown by the sign 610 in Fig. 6, in the power plan devised by the power control apparatus 40, during a period from 13:00 to 16:00, it is planned to use the power from the battery 12 to supply power to the business office 30 for peak cut of the business office 30. The reservation based on the power plan and the reservation based on the dispatch plan conflict for the vehicle 10. Therefore, the reservation arbitration unit 320 arbitrates the reservation based on the power plan and the reservation based on the dispatch plan as below.

Here, in the power plan, selection conditions other than the usage period for selecting the vehicle 10 to be used are assumed to be set such that the amount of power to be supplied from the battery 12 is designated, and the time for using the vehicle 10 is not allowed to be changed (time change: not allowed). In this case, the reservation arbitration unit 320 can supply a designated amount of power to the battery 12 during a designated period, and selects a vehicle 10d as the vehicle 10 for which the overlapping period between the usage period of the vehicle 10 according to the dispatch plan and the usage period of the vehicle 10 according to the power plan is the shortest.

As shown in Fig. 5, in the reservation of the user A for the vehicle 10d, the changes of the vehicle to be used, the vehicle type and the usage time are not allowed. However, because the reservation mandatory level of the user A is "low", the reservation arbitration unit 320 determines that the reservation of the user A for the vehicle 10d is possible to be canceled.

Furthermore, in the reservation of the user B for the vehicle 10d, the change of the vehicle to be used is allowed, on the other hand, the usage time is not allowed to be changed. Because there is no reservation for a vehicle 10a during a period from 14:30 to 15:00, the reservation arbitration unit 320 determines that the vehicle to be used during a period from 14:30 to 15:00 by the user B is possible to be changed to the vehicle 10a.

Furthermore, in the reservation of the user C for the vehicle 10d, the vehicle to be used and the usage time are allowed to be changed, on the other hand, the priority of the vehicle designation is higher than the priority of time designation. Therefore, the reservation arbitration unit 320 determines that the usage time of the vehicle 10d by the user C is possible to be changed to be from 16:00 to 16:30.

According to the above descriptions, the reservation arbitration unit 320 cancels the reservation without assigning the vehicle 10d to the user A, changes the vehicle to be used as shown by the sign 618 to the vehicle 10a in the reservation of the user B for the vehicle 10d, and changes the usage time as shown by the sign 619 to be from 16:00 to 16:30 in the reservation of the user C for the vehicle 10d, thereby determines that electrical power is supplied from the battery 12d of the vehicle 10d to the business office 30 based on the power plan during a period from 13:00 to 16:00 as shown by the sign 620. Then, the fact that the reservation if canceled is notified to the user A, the fact that the vehicle to be used is changed to the vehicle 10a is notified to the user B, and the fact that the usage time of the vehicle 10d is changed to be from 16:00 to 16:30 is notified to the user C through the communication unit 290 of the vehicle management apparatus 60. As a result, the battery 12 of the vehicle 10 can be effectively used for the peak cut of the business office 30 within a range that can be allowed by the user A, the user B, and the user C.

According to the system 5 in the present embodiment, in cases where the dispatch plan and the power plan are not compatible, the user can make adjusts to incorporate the reservation of the power plan by changing the selection condition with low importance in an allowable range. This allows for expanded opportunities to use the battery 12 of the vehicle 10 for energy management at the business office 30 without major changes to the dispatch plan.

In the system 5 as described above, a form of arbitrating conflicts between the reservation of the vehicle 10 according to the dispatch plan and the reservation of the vehicle 10 according to the power plan is described. However, the system 5 can also be applied to a form of arbitrating conflicts between reservations of the vehicle 10 according to the dispatch plan only. In the present embodiment, the vehicle 10 is taken as an example of a reservation target for description, but the reservation target is not limited to vehicles, but may be any good, any equipment, any service, etc.

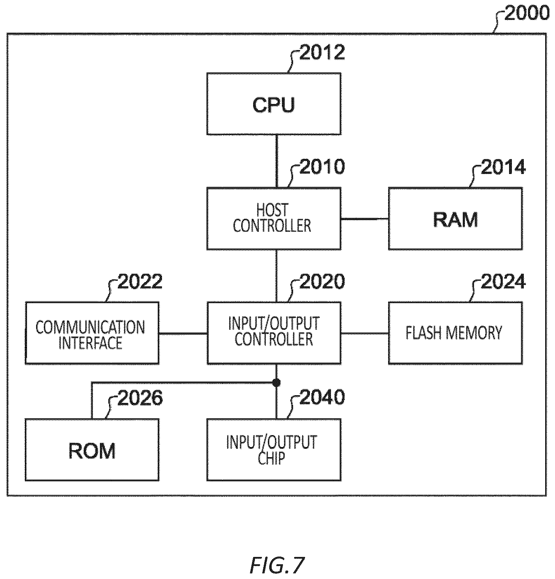

Fig. 7 illustrates an example of a computer 2000 in which a plurality of embodiments of the present invention may be entirely or partially embodied. A program installed in the computer 2000 can cause the computer 2000 to function as the system 5 or each module of the system 5, or an apparatus such as the power control apparatus 40 and the vehicle management apparatus 60 or each module of the apparatus according to the embodiment and to execute an operation associated with the system or each module of the system, or the apparatus or each module of the apparatus, and/or execute a process or a step of the process according to the embodiment. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer readable storage medium such as a CD-ROM, a DVD-ROM, or a memory card. The RAM 2014, the ROM 2026, or the flash memory 2024 is an example of the computer readable storage medium. The program is installed in the flash memory 2024, the RAM 2014, or the ROM 2026, and executed by the CPU 2012. Information processing written in these programs is read by the computer 2000, and provides cooperation between the programs and the various types of hardware resources described above. An apparatus or a method may be actualized by executing operations or processing of information according to a use of the computer 2000.

For example, when a communication is executed between the computer 2000 and an external device, the CPU 2012 may execute a communication program loaded on the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 and the like to be read into the RAM 2014, and execute various kinds of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various kinds of operations, information processing, conditional judgement, conditional branching, unconditional branching, information retrieval/replacement, or the like described herein and designated by instruction sequences of the programs, and write back a result into the RAM 2014. In addition, the CPU 2012 may retrieve information in a file, a database, or the like in the recording medium. For example, when multiple entries each having an attribute value of a first attribute associated with an attribute value of a second attribute, is stored in the recording medium, the CPU 2012 may retrieve an entry having a designated attribute value of the first attribute that matches a condition from these multiple entries, and read the attribute value of the second attribute stored in this entry, thereby obtaining the attribute value of the second attribute associated with the first attribute that satisfies a predetermined condition.

The programs or software module described above may be stored on the computer 2000 or in a computer-readable storage medium near the computer 2000. A recording medium such as a hard disk or a RAM provided in a server system connected to a dedicated communication network or the Internet can be used as the computer readable storage medium. A program stored in the computer readable storage medium may be provided to the computer 2000 via a network.

The program installed in the computer 2000 to cause the computer 2000 to function as the integrated management apparatus 50 may work on the CPU 2012 or the like to cause the computer 2000 to function as each unit of the integrated management apparatus 50. The information processing described in these programs is read by the computer 2000 to function as each unit of the integrated management apparatus 50 which is specific means by which software and the above-described various hardware resources cooperate. Then, when a calculation or processing of information according to the use purpose of the computer 2000 in the present embodiment is realized by the specific means, the unique integrated management apparatus 50 according to the use purpose is constructed.

The program installed in the computer 2000 to cause the computer 2000 to function as the vehicle management apparatus 60 may work on the CPU 2012 or the like to cause the computer 2000 to function as each module of the vehicle management apparatus 60. The information processing described in these programs is read by the computer 2000 to function as each module of the vehicle management apparatus 60 which is a specific means in which software and the above-described various hardware resources cooperate. Then, when calculation or processing of information according to the use purpose of the computer 2000 in the present embodiment is realized by these specific means, the unique vehicle management apparatus 60 according to the use purpose is constructed.

Various embodiments have been described with reference to the block diagrams and the like. In the block diagrams, each block may represent (1) a stage of a process in which an operation is executed, or (2) each unit of the apparatus having a role in executing the operation. A specific step and each unit may be implemented by a dedicated circuit, a programmable circuit supplied with computer readable instructions stored on a computer readable storage medium, and/or a processor supplied with computer readable instructions stored on a computer readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer readable storage medium may include any tangible device capable of storing instructions to be executed by an appropriate device. Thereby, the computer readable storage medium having instructions stored therein forms at least a part of a product including instructions which can be executed to provide means for executing processing procedures or operations designated in the block diagrams. Examples of the computer readable storage medium may include an electronic storage medium, a magnetic storage medium, an optical storage medium, an electromagnetic storage medium, a semiconductor storage medium, and the like. More specific examples of the computer-readable storage medium may include a FLOPPY (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disc (DVD), a BLU-RAY (registered trademark) disc, a memory stick, an integrated circuit card, and the like.

The computer readable instructions may include an assembler instruction, an instruction-set-architecture (ISA) instruction, a machine instruction, a machine dependent instruction, a microcode, a firmware instruction, state-setting data, or either of source code or object code written in any combination of one or more programming languages including an object oriented programming language such as Smalltalk (registered trademark), JAVA (registered trademark), and C++, or the like, and a conventional procedural programming language such as a "C" programming language or a similar programming language.

Computer readable instructions may be provided to a processor of a general purpose computer, a special purpose computer, or another programmable data processing apparatus, or to programmable circuit, locally or via a local area network (LAN), wide area network (WAN) such as the Internet or the like, and a computer readable instruction may be executed to provide means for executing operations designated in the described processing procedures or block diagrams. Examples of the processor include a computer processor, a processing unit, a microprocessor, a digital signal processor, a controller, a microcontroller, and the like.

While the present invention has been described with the embodiments, the technical scope of the present invention is not limited to the above-described embodiments. It is apparent to persons skilled in the art that various alterations and improvements can be added to the above-described embodiments. It is also apparent from the described scope of the claims that the embodiments added with such alterations or improvements can be included the technical scope of the present invention.

The operations, procedures, steps, and stages of each process performed by an apparatus, system, program, and method shown in the claims, specification, or drawings can be performed in any order as long as the performed order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

5: system; 10: vehicle; 12: battery; 30, 31: business office; 40, 41: power control apparatus; 50, 51: integrated management apparatus; 60, 61: vehicle management apparatus; 70: power consumer; 80: power generation apparatus; 90: electric power grid; 140: power control apparatus; 180: server; 190: communication network; 200: processing unit; 210: accepting unit; 220: plan unit; 280: storage unit; 290: communication unit; 300: processing unit; 310: accepting unit; 320: reservation arbitration unit; 380: storage unit; 390: communication unit; 601, 602, 603, 604, 605, 606, 607, 608, 609, 610, 618, 619, 620: sign; 2000: computer; 2010: host controller; 2012: CPU; 2014: RAM; 2020: input/output controller; 2022: communication interface; 2024: flash memory; 2026: ROM; 2040: input/output chip.

## Claims

1. A system that accepts and manages reservation information of a reservation target, comprising:
an accepting unit that accepts the reservation information, wherein the reservation information includes a selection condition for selecting a reservation target to be used by a user from reservation target candidates, and importance information that designates importance of the selection condition; and
a storage unit that stores the selection condition and the importance information in association with each other.

2. The system according to claim 1, further comprising a reservation arbitration unit that arbitrates conflicting reservations by excluding a selection condition for which the importance is lower in a case of conflicting reservations for a first reservation target.

3. The system according to claim 2, wherein the reservation arbitration unit arbitrates, in a case of conflicting reservations for the first reservation target, conflicting reservations by selecting a second reservation target that meets the selection condition that has been excluded from reservation target candidates.

4. The system according to claim 2 or 3, wherein the reservation target is a vehicle.

5. The system according to claim 4, wherein the selection condition includes at least one of a condition for selecting a usage period of the vehicle, a condition for selecting a vehicle type, or a condition for selecting a particular vehicle.

6. The system according to claim 4, wherein:
the vehicle is an electrically powered vehicle with a battery;
the selection condition includes a condition for selecting a usage period of the vehicle;
the usage period is one of a first period of using the battery for exchanging electrical power with a power grid or a second period during which the vehicle is in operation;
the reservation arbitration unit determines, in a case where the first period and the second period conflict for a first vehicle, the first vehicle as a vehicle for exchanging electrical power with the power grid, together with a second vehicle as the vehicle in operation.

7. The system according to claim 1 or 2, wherein the reservation information further includes priority information indicating priority of each of a plurality of selection conditions.

8. The system according to claim 2 or 3, wherein:
the reservation information further includes mandatory information indicating whether a reservation is mandatory; and
when the reservation information includes the mandatory information indicating a fact that a reservation is not mandatory, the reservation arbitration unit does not assign a reservation target to a user if a reservation target that satisfies the selection condition is not among reservation target candidates.

9. The system according to claim 2 or 3, further comprising a transmitting unit that transmits a notification indicating that a reservation target has been changed to a user for whom the reservation target has been changed, when the reservation target is changed due to arbitration of conflicting reservations by the reservation arbitration unit.

10. A method for accepting and managing reservation information of a reservation target, comprising:
accepting the reservation information, wherein the reservation information includes a selection condition for selecting a reservation target to be used by a user from reservation target candidates, and importance information that designates importance of the selection condition; and
storing the selection condition and the importance information in association with each other.

11. A program for causing a computer to function as the system according to claim 1 or 2.
